# EUROPEAN PATENT SPECIFICATION

(11) **EP 2 750 940 B1**
(45) Date of publication and mention of the grant of the patent: **31.08.2016**
(21) Application number: 12745837.0
(22) Date of filing: 06.08.2012
(51) Int. Cl.: B60S 1/38, B60S 1/40

(54) **WIPER BLADE FOR A WIPER ARRANGEMENT OF A MOTOR VEHICLE**
WISCHBLATT FÜR EINE WISCHANLAGE EINES KRAFTFAHRZEUGS
BALAI D'ESSUIE-GLACE POUR UN AMÉNAGEMENT D'ESSUIE-GLACE D'UN VÉHICULE MOTORISÉ

(30) Priority: 29.08.2011 DE 102011053088
(43) Date of publication of application: 09.07.2014
(73) Proprietor: Valeo Wischersysteme GmbH, 74321 Bietigheim-Bissingen (DE)
(72) Inventor: BUSS, Michael, 74369 Lochgau (DE)
(74) Representative: Callu Danseux, Violaine
(86) International application number: PCT/EP2012/065354
(87) International publication number: WO 2013/029929

(56) References cited:
- DE-A1- 10 257 988
- DE-A1-102008 011 449
- DE-U1-202004 012 300

## Description

### Prior art

The invention relates to a wiper blade for a wiper arrangement of a motor vehicle according to Claim 1.

A wiper blade of this type is known from the applicant's DE 10 2008 011 449 A1. The known wiper blade has a wiper blade adapter which is connected to the wiper blade body and may be connected to a cross-sectionally U-shaped connecting region of the wiper arm. For this purpose, the connecting region of the wiper arm, at the two side leg ends thereof which face away from the base section of the U-shaped connecting region, has in each case two holding regions which are arranged spaced apart from each other with respect to the longitudinal axis of the wiper arm and interact with the wiper blade adapter by the holding regions surrounding the wiper blade adapter on the lower side of the wiper blade adapter element on the wiper arm side. At the same time, because of an appropriate geometry of the wiper blade adapter, an axial stop is obtained when the wiper blade is mounted on the wiper arm. Furthermore, in order to secure the wiper blade on the wiper arm, the known wiper blade has a securing tongue which, in the operating state of the wiper blade, engages in a form-fitting manner in an opening, which is arranged in the base section of the connecting region and is in the form of an aperture, and is latched there. In order to remove the wiper blade, the securing tongues have to be pressed in the latching region thereof into the opening in the wiper arm and the wiper blade has to be pulled out in the longitudinal direction of the wiper blade body in order, subsequently, by means of a movement perpendicular thereto, to permit the holding regions of the wiper arm to pass out of operative connection to the wiper blade adapter.

Furthermore, the prior art discloses wiper blades and wiper blade adapters which have connections for supplying the wiper blade with a washing fluid. The connections are in this case customarily embodied in the form of tubular connecting branches in the wiper blade adapter, said connecting branches being connected to one or more hose lines which are arranged in the region of the wiper arm. However, given a predetermined length of the wiper blade adapter in the longitudinal direction of the wiper blade, a wiper blade adapter of this type requires a relatively large overall height because of the additional connections. This is critical whenever the securing tongue discussed has to be guided above the connections so as to be able to interact with the opening in the wiper arm.

Document DE 20 2004 012 300 U discloses a wiper blade for a wiper arrangement according to the preamble of claim 1.

### Disclosure of the invention

Proceeding from the described prior art, the invention is based on the object of developing a wiper blade for a wiper arrangement of a motor vehicle according to the precharacterizing clause of Claim 1 in such a manner that said wiper blade permits a particularly compactly constructed wiper blade adapter and, furthermore, can be fitted and removed in a particularly simple manner. This object is achieved according to the invention in the case of a wiper blade for a wiper arrangement of a motor vehicle having the features of Claim 1 in that the at least one securing tongue, on mounting of the wiper blade on the wiper arm, is arranged in operative connection with a holding section of the wiper arm and is pressed in by the latter in the direction of the wiper blade adapter, and that in the operating position the holding section lies against the holding region of the securing tongues, forming a stop. Put another way, this means that the securing tongue arranged, in the prior art, above, for example, washing fluid connections, can be omitted, since the securing tongue is arranged laterally on the wiper blade adapter and interacts with the holding section of the wiper arm. This permits a wiper blade adapter which is compact in particular in the overall height thereof.

Advantageous developments of the wiper blade according to the invention are indicated in the dependent claims. The scope of the invention includes all combinations of at least two features disclosed in the claims, the description and/or the figures.

In a particularly preferred wiper blade configuration which can be operated particularly simply and, furthermore, prevents the wiper blade from becoming detached from the wiper arm in the event of breakage of a securing tongue, it is proposed that two securing tongues are arranged on opposite sides of the adapter element on the wiper arm side.

In order, when mounting the wiper blade on the wiper arm, to permit yielding of the securing tongue during the relative movement of the wiper blade with respect to the wiper arm, so that the holding section can enter into operative connection with the wiper blade adapter without additional further (manual) interventions, it is proposed that on the side facing the base section of the fastening section, the securing tongue is connected with the adapter element on the wiper arm side and extends substantially perpendicularly to the longitudinal access of the adapter element on the wiper arm side.

Furthermore, in order to keep the removal forces for pressing in the securing tongue as small as possible, it is proposed that the securing tongue has at its one end a manually actuable pressing-in region. Owing to the fact that the pressing-in region is arranged at one end of the securing tongue, the greatest possible lever effect, or the smallest possible pressing-in force, is achieved for an operator.

Furthermore, in a further alternative of the embodiment described last, it is provided that the pressing-in region projects laterally over the side leg of the wiper arm. As a result, a particularly simple and intuitive operation of the wiper blade is possible for an operator, since said operator can very easily detect the pressing-in region by touch, and the pressing in of the pressing-in region is facilitated by the operator not coming into contact with other components of the wiper blade during the pressing-in operation.

A configuration of the invention, in which the wiper blade has connections for supplying washing fluid to the wiper blade, is very particularly preferred. In order, in this case, to be able particularly readily and simply to check the connections of the wiper blade adapter and to permit relatively simple mounting and removing of the hose lines on/from the wiper blade adapter, it is proposed that the wiper blade adapter has at least one connection for a line for the supply of the wiper blade with a washing fluid, and that on its upper side in the region of the connection the wiper blade adapter has an aperture, which makes possible an intervention to the connection.

Furthermore, the discussed connection of the line to the connection can be checked during the operating position of the wiper blade on the wiper arm if the aperture is arranged in alignment with an aperture formed in the base section of the wiper arm.

Further advantages, details and features of the invention emerge from the description below of preferred exemplary embodiments and with reference to the drawing, in which:
- Fig. 1: shows a perspective view of a wiper arrangement with a wiper arm and a wiper blade according to the invention,
- Fig. 2: shows a perspective view of the wiper arm of the wiper arrangement according to Fig. 1 in a connecting region,
- Fig. 3: shows a wiper arm adapter element on the wiper arm side, in a perspective view,
- Fig. 4: shows a wiper blade adapter, as used in the case of a wiper blade according to the invention, and
- Fig. 5 and Fig.6: show, in a perspective view in each case, a wiper blade according to the invention during the mounting operation on a wiper arm during various mounting phases.

Identical components and components with the same function are provided with the same reference numbers in the figures.

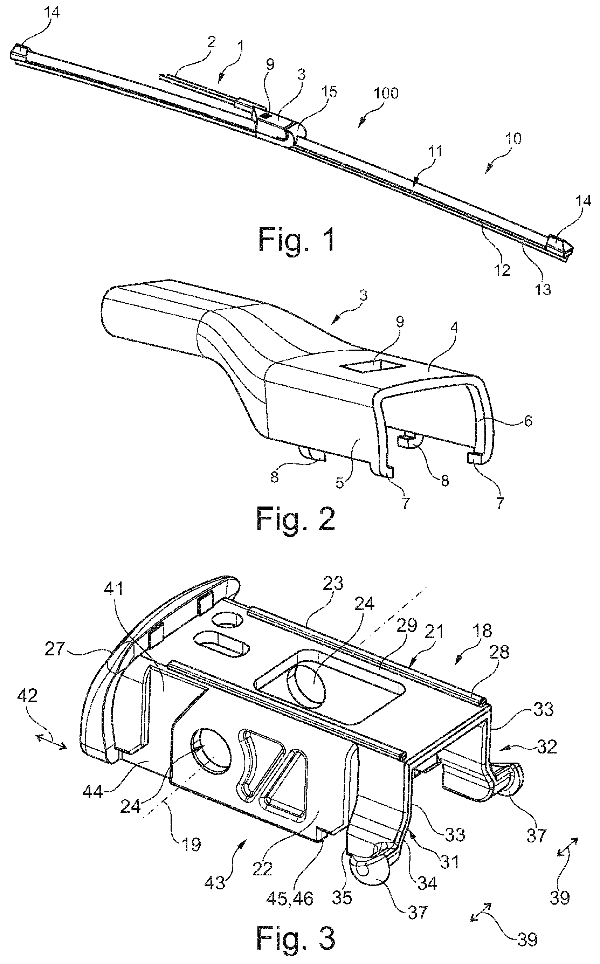

The wiper arrangement 100 which is illustrated in Fig. 1 and is intended for cleaning windows of motor vehicles has a wiper arm 1 and a wiper blade 10 according to the invention, which can be connected to the wiper arm 1. The wiper arm 1 comprises a wiper rod 2 which is connected in a connecting region 3 of the wiper arm 1 to the wiper blade 10. The connecting region 3 has a substantially U-shaped cross section, as can best be seen from looking at Figs 1 and 2. The connecting region 3 has a base section 4, from which respective side legs 5, 6 arranged at a right angle to the base section 4 protrude on the side facing the wiper blade 10. Each of the two side legs 5, 6 respectively has on the side facing away from the base section 4 two holding sections 7, 8 which are spaced apart axially from each other in the longitudinal direction of the wiper blade or in the longitudinal direction of the wiper arm 1 and are bent over inwards at a right angle. Furthermore, an aperture in the form of a rectangular opening 9 is also formed in the base section 4 of the connecting region 3. The wiper blade 10 is fastened interchangeably to the wiper arm 1 described to this extent, or to the connecting region 3 thereof.

The wiper blade 10 comprises an elongate wiper blade body 11 which is composed, in particular, of flexible material and with a respective spring rail 12, which is composed of sheet metal and serves to stiffen the wiper blade body 11, arranged in corresponding grooves on mutually opposite sides in the longitudinal direction of said wiper blade body. On the side facing the vehicle window, the wiper blade body 11 has a wiper lip 13. On the side facing away from the wiper lip 13, the wiper blade body 11 may be designed in the manner of a spoiler. The two opposite end regions of the wiper blade body 11 are closed by means of respective covering caps 14. The wiper blade body 11 is connected to a wiper blade adapter 15, which is merely indicated in Fig. 1. The wiper blade 10 described to this extent is known per se and, moreover, may be modified in diverse ways in comparison to the previous description.

As can be seen in particular from looking at Figs. 3 to 7, the wiper blade adapter 15 consists of an adapter element 17 on the wiper blade side and of an adapter element 18 on the wiper arm side, which are connected to each other and are arranged so as to be pivotable with respect to each other in a rotation axis 19. In this case, the holding sections 7, 8 are arranged between the rotation axis 19 when the wiper blade 10 is fitted.

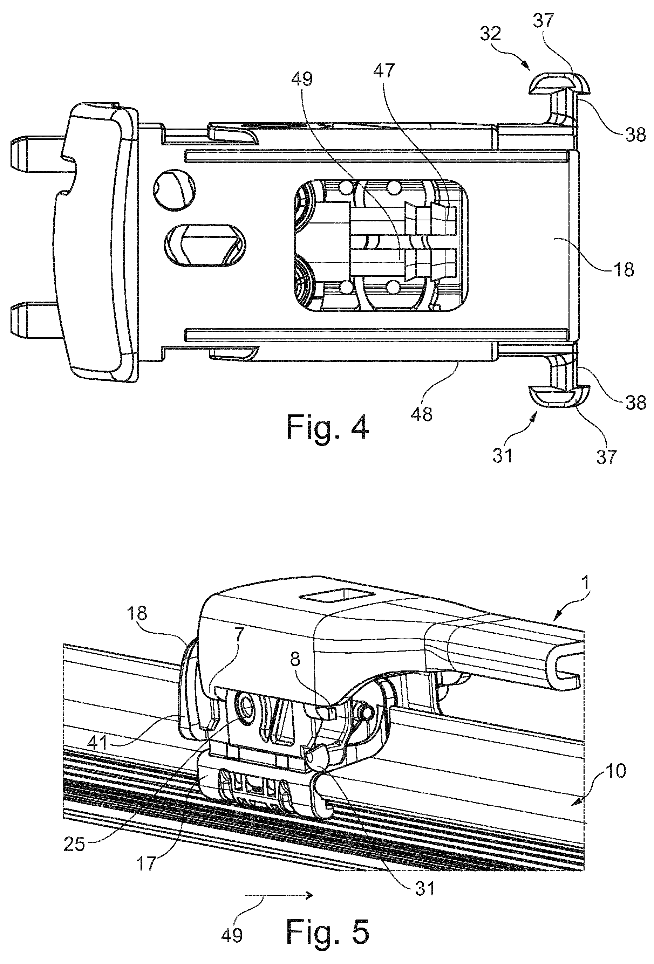

The adapter element 18 on the wiper arm side is illustrated in more detail in Fig. 3. It comprises a cross-sectionally substantially U-shaped carrier 21, the two opposite side walls 22, 23 of which each have an aperture 24, in which a cross-sectionally round pin 25 (Fig. 5) of the adapter element 17 on the wiper blade side engages, in order to permit the discussed pivotability about the rotation axis 19. On the side facing away from the wiper arm 1, the cross section of the carrier 21 is closed by an end plate 27. The end plate 27 projects both laterally and beyond the upper side 28 of the carrier 21. Furthermore, an opening 29, rectangular in the exemplary embodiment, in the form of an aperture is formed in the upper side 28 of the carrier 21.

On that end side of the carrier 21 which faces away from the end plate 27, i.e. on the side facing the wiper arm 1, the carrier 21 has securing tongues 31, 32 approximately in alignment with the side walls 22, 23. The two securing tongues 31, 32 are each integrally formed on the upper side 28 of the carrier 21, run at least substantially perpendicularly to the longitudinal axis of the adapter element 18 on the wiper arm side, and have a first region 33 which runs parallel to the side walls 22, 23 and which is adjoined on the side facing away from the upper side 28 by a second region 34 which is curved or is bent over outwards. The second region 34 merges, in turn, into an end section 35 which is arranged parallel to the side walls 22, 23, forms a holding region for the wiper blade 10 and on which, on the side opposite the end plate 27, an outwardly projecting actuating region 37 is integrally formed, said actuating region protruding laterally over the end section 35 (and the side legs 5, 6 of the connecting region 3 when the wiper blade 10 is fitted) and being connected to the end section 35 via a web 38 (see Fig. 4).

The two securing tongues 31, 32 are movable elastically to and fro on the carrier 21 in the direction of the double arrows 39. On that side of the carrier 21 which faces the end plate 27, the two side walls 22, 23 have a depression in the form of a guide channel 41 for the one holding section 7 of the connecting region 3 of the wiper arm 1, which holding section faces the guide channel 41. The guide channel 41 permits a relative movement of the wiper blade 10 with respect to the connecting region 3 in the direction of the double arrow 42, which runs at least substantially perpendicularly to the longitudinal direction of the wiper blade. On the side facing the lower side 43 of the carrier 21, the guide channel 41 opens into expanding section 44 which reaches as far as the end plate 27.

The two securing tongues 31, 32 are arranged in such a manner that, during the mounting or removal of the wiper blade 10 on/from the wiper arm 1, said securing tongues are aligned with the second holding section 8 of the connecting region 3. In the region of the lower side 43 of the carrier 21, said holding sections each have a notch 45, adjacent to the securing tongues 31, 32, the side of the notch which faces the end plate 27 forming a stop surface 46 for the second holding sections 8 in the operating position of the wiper blade 10 on the wiper arm 1.

As can be seen in particular with reference to Figs. 4 and 5, the adapter element 17 on the wiper blade side has two connecting branches 47, 48 which are arranged parallel to each other and onto which the end of a hose line (not illustrated) can be pushed in each case, via which hose line the wiper blade adapter 15 or the wiper blade 10 can be supplied with a washing fluid. As can be seen in particular with reference to Fig. 4, the connecting branches 47, 48 are aligned with the opening 29 in the adapter element 18 on the wiper arm side in such a manner that the state of the connecting branches 47, 48, or the connection of the hose lines to the connecting branches 47, 48 can be checked via the opening 29. Furthermore, it is particularly preferred that, in the operating position of the wiper blade 10 on the wiper arm 1, the opening 29 on the wiper blade adapter 15 is aligned with the opening 9 in the connecting region 3 such that, when the wiper blade 10 is fitted, the region of the connecting branches 47, 48 can be checked from the outside.

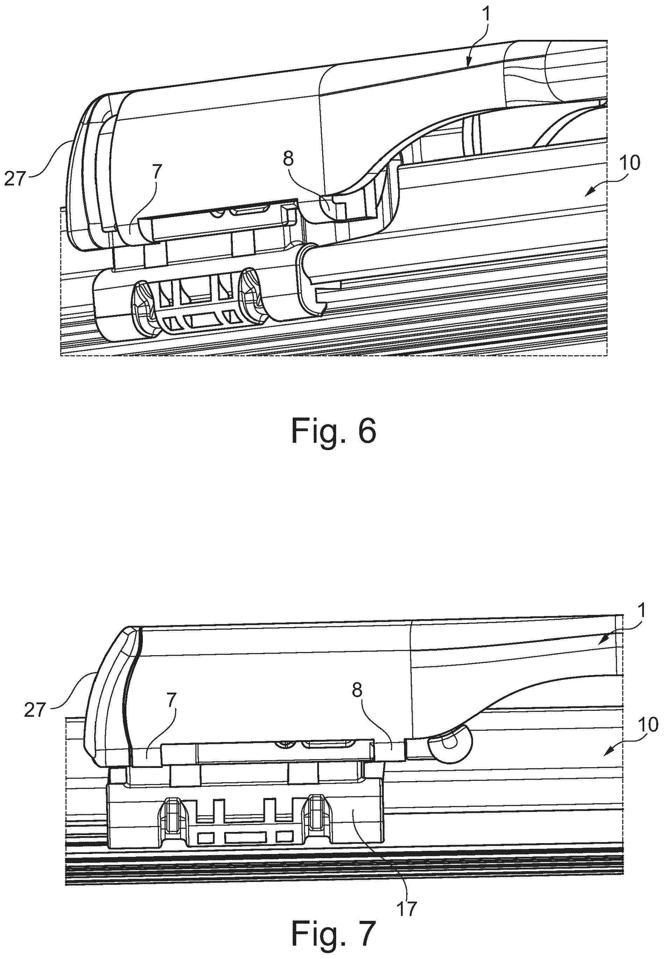

The mounting of the wiper blade 10 on the wiper arm 1 will be explained with reference to Figs. 5 to 7: according to Fig. 5, the wiper blade 10 or the wiper blade adapter 15 is first of all aligned with the connecting region 3 of the wiper arm 1 in such a manner that the holding sections 7 can be introduced from above into the guide channels 41 of the wiper blade adapter 15 while the other holding sections 8 are located in the region of the securing tongues 31, 32. When the holding sections 7 are pushed into the guide channels 41, the holding sections 8 enter into operative connection with the securing tongues 31, 32, in particular with the second regions 34 thereof, such that the securing tongues 31, 32 are pressed or yield inwards. Fig. 6 illustrates the state, in which the wiper blade adapter 15 is fully introduced into the connecting region 3. In said state, the (front) holding sections 7 are in the region of the sections 44 of the guide channels 41 while the (rear) holding sections 8 are located in the region of the end sections 35 of the securing tongues 31, 32. The wiper blade 10 is subsequently moved in the direction of the arrow 49 until the holding sections 7 bear against the end plate 27, and the holding sections 8 bear against the stop surfaces 46 of the adapter element 18 on the wiper arm side. In said state, the wiper blade 10 or the wiper blade adapter 15 is held in a form-fitting manner by the connecting region 3 of the wiper arm 1 while the securing tongues 31, 32 at the same time are released by the movement of the wiper blade 10 in the direction of the end plate 27 and snap outwards such that the webs 38 and the end sections 35 of the securing tongues 31, 32 secure the wiper blade 10 to the wiper arm 1 counter to the mounting direction (arrow 49) of the wiper blade 10.

In order to remove the wiper blade 10 from the wiper arm 1, the two opposite actuating regions 37 of the securing tongues 31 32 are pressed inwards manually, whereupon the wiper blade 10 can subsequently be pulled horizontally out of the wiper arm 1, or the connecting region 3, counter to the direction of the arrow 49. The wiper blade 10 is subsequently moved perpendicularly to the arrow 49 such that the holding sections 7, 8 can be guided within the guide channels 41 and along the securing tongues 31, 32.

The wiper blade 10 described to this extent may be modified in diverse ways without deviating from the inventive concept.

### List of reference numbers

- 1: Wiper arm
- 2: Wiper rod
- 3: Connecting region
- 4: Base section
- 5: Side leg
- 6: Side leg
- 7: Holding section
- 8: Holding section
- 9: Opening
- 10: Wiper blade
- 11: Wiper blade body
- 12: Spring rail
- 13: Wiper lip
- 14: Covering cap
- 15: Wiper blade adapter
- 17: Adapter element on the wiper blade side
- 18: Adapter element on the wiper arm side
- 19: Rotation axis
- 21: Carrier
- 22: Side wall
- 23: Side wall
- 24: Aperture
- 25: Pin
- 27: End plate
- 28: Upper side of the carrier
- 29: Opening
- 31: Securing tongue
- 32: Securing tongue
- 33: First region
- 34: Second region
- 35: End section
- 37: Actuating region
- 38: Web
- 39: Double arrow
- 41: Guide channel
- 42: Double arrow
- 43: Lower side of the carrier
- 44: Section
- 45: Notch
- 46: Stop surface
- 47: Connecting branch
- 48: Connecting branch
- 49: Arrow
- 100: Wiper arrangement

## Claims

1. A wiper blade (10) for a wiper arrangement (100) of a motor vehicle, with an elongated wiper blade body (11), which is able to be fastened via a wiper blade adapter (15) onto a wiper arm (1) of the wiper arrangement (100), wherein the wiper blade adapter (15) consists of an adapter element (17) on the wiper blade side and of an adapter element (18) on the wiper arm side, which are arranged so as to be pivotable with respect to each other in a rotation axis (19), wherein the adapter element (18) on the wiper arm side is able to be connected with the wiper arm (1) on a wiper arm end, wherein the wiper arm end in the connecting region (3) with the adapter element (18) on the wiper arm side has a substantially U-shaped cross-section with a base section (4) and two side legs (5,6) projecting from the base section (4), wherein the side legs (5,6) on the side facing away from the base section (4) respectively have two inwardly bent holding sections (7,8), which embrace the adapter element (18) on the wiper arm side for fastening the wiper blade (10) on the wiper arm (1), and wherein the adapter element (18) on the wiper arm side comprises at least one articulatedly arranged securing tongue (31,32) with a holding region (35), which in the operating position of the wiper blade (10) on the wiper arm (1) arrests the wiper blade (10) against a mounting direction (49),
**characterized in that**
the two inwardly bent holding sections (7,8) are spaced apart from each other axially in the longitudinal direction of the wiper arm (1) or respectively of the wiper blade adapter (15), and **in that**
the at least one securing tongue (31,32), on mounting of the wiper blade (10) on the wiper arm (1), is arranged in operative connection with a holding section (8) of the wiper arm (1) and is pressed in by the latter in the direction of the wiper blade adapter (15), and that in the operating position the holding section (8) lies against the holding region (35) of the securing tongues (31,32), forming a stop.

2. The wiper blade according to Claim 1,
**characterized in that**
two securing tongues (31,32) are arranged on opposite sides of the adapter element (18) on the wiper arm side.

3. The wiper blade according to Claim 1 or 2,
**characterized in that**
on the side facing the base section (4) of the connecting region (3), the securing tongue (31,32) is connected with the adapter element (18) on the wiper arm side and extends substantially perpendicularly to the longitudinal axis of the adapter element (18) on the wiper arm side.

4. The wiper blade according to Claim 3,
**characterized in that**
the securing tongue (31,32) has at its one end a manually actuatable actuating region (37).

5. The wiper blade according to Claim 4,
**characterized in that**
the actuating region (37) projects laterally over the side leg (5,6) of the wiper arm (1).

6. The wiper blade according to one of Claims 3 to 5,
**characterized in that**
on the side facing the base section (4) of the connecting region (3), the securing tongue (31,32) has a first region (33), arranged spaced apart from the holding section (8), to which a second, obliquely arranged region (34) adjoins, which is arranged in operative connection with the holding section (8).

7. The wiper blade according to one of Claims 1 to 6,
**characterized in that**
the rotation axis (19) between the two adapter elements (17,18) is arranged in a region between the holding sections (7,8) which are spaced apart axially from each other in longitudinal direction.

8. The wiper blade according to one of Claims 1 to 7,
**characterized in that**
the securing tongue (31,32) is arranged on the front face of the wiper blade adapter (15) facing the wiper arm (1).

9. The wiper blade according to one of Claims 1 to 8,
**characterized in that**
the wiper blade adapter (15) has at least one connection (47,48) for a line for the supply of the wiper blade (10) with a washing fluid, and that on its upper side in the region of the connection (47,48) the wiper blade adapter (15) has an aperture (29), which makes possible an intervention to the connection (47, 48).

10. The wiper blade according to Claim 9,
**characterized in that**
the aperture (29) is arranged in alignment with an opening (9) formed in the base section (4) of the wiper arm (1).

## Patentansprüche

1. Wischblatt (10) für eine Wischeinrichtung (100) eines Kraftfahrzeugs, mit einem langgestreckten Wischblattkörper (11), der über einen Wischblattadapter (15) an einen Wischarm (1) der Wischeinrichtung (100) befestigbar ist, wobei der Wischblattadapter (15) aus einem wischblattseitigen Adapterelement (17) und einem wischarmseitigen Adapterelement (18) besteht, die in einer Drehachse (19) schwenkbar zueinander angeordnet sind, wobei das wischarmseitige Adapterelement (18) mit dem Wischarm (1) an einem Wischarmende verbindbar ist, wobei das Wischarmende im Verbindungsbereich (3) mit dem wischarmseitigen Adapterelement (18) einen im Wesentlichen U-förmigen Querschnitt mit einem Basisabschnitt (4) und zwei vom Basisabschnitt (4) abragenden Seitenschenkeln (5, 6) aufweist, wobei die Seitenschenkel (5, 6) auf der von dem Basisabschnitt (4) abgewandten Seite jeweils zwei, nach innen umgebogene Halteabschnitte (7, 8) aufweisen, die zum Befestigen des Wischblatts (10) am Wischarm (1) das wischarmseitige Adapterelement (18) umgreifen, und wobei das wischarmseitige Adapterelement (18) wenigstens eine gelenkig angeordnete Sicherungszunge (31, 32) mit einem Haltebereich (35) umfasst, der in der Betriebsstellung des Wischblatts (10) am Wischarm (1) das Wischblatt (10) entgegen einer Montagerichtung (49) arretiert,
**dadurch gekennzeichnet,**
**dass** die nach innen umgebogenen Halteabschnitte (7, 8) axial in Längsrichtung des Wischarms (1) bzw. des Wischblattadapters (15) voneinander beabstandet sind, und dadurch,
**dass** die wenigstens eine Sicherungszunge (31, 32) bei der Montage des Wischblatts (10) am Wischarm (1) in Wirkverbindung mit einem Halteabschnitt (8) des Wischarms (1) angeordnet ist und von diesem in Richtung des Wischblattadapters (15) eingedrückt wird, und dass der Halteabschnitt (8) in der Betriebsstellung an dem Haltebereich (35) der Sicherungszungen (31, 32), einen Anschlag ausbildend, anliegt.

2. Wischblatt nach Anspruch 1,
**dadurch gekennzeichnet,**
**dass** zwei Sicherungszungen (31, 32) auf einander gegenüberliegenden Seiten des wischarmseitigen Adapterelements (18) angeordnet sind.

3. Wischblatt nach Anspruch 1 oder 2,
**dadurch gekennzeichnet,**
**dass** die Sicherungszunge (31, 32) auf der dem Basisabschnitt (4) des Verbindungsbereichs (3) zugewandten Seite mit dem wischarmseitigen Adapterelement (18) verbunden ist und sich im Wesentlichen senkrecht zur Längsachse des wischarmseitigen Adapterelements (18) erstreckt.

4. Wischblatt nach Anspruch 3,
**dadurch gekennzeichnet,**
**dass** die Sicherungszunge (31, 32) an ihrem einen Ende einen manuell betätigbaren Betätigungsbereich (37) aufweist.

5. Wischblatt nach Anspruch 4,
**dadurch gekennzeichnet,**
**dass** der Betätigungsbereich (37) den Seitenschenkel (5, 6) des Wischarms (1) seitlich überragt.

6. Wischblatt nach einem der Ansprüche 3 bis 5,
**dadurch gekennzeichnet,**
**dass** die Sicherungszunge (31, 32) auf der dem Basisabschnitt (4) des Verbindungsbereichs (3) zugewandten Seite einen ersten, beabstandet zum Halteabschnitt (8) angeordneten Bereich (33) aufweist, an den sich ein zweiter, schräg angeordneter Bereich (34) anschließt, der in Wirkverbindung mit dem Halteabschnitt (8) angeordnet ist.

7. Wischblatt nach einem der Ansprüche 1 bis 6,
**dadurch gekennzeichnet,**
**dass** die Drehachse (19) zwischen den beiden Adapterelementen (17, 18) in einem Bereich zwischen den axial in Längsrichtung voneinander beabstandeten Halteabschnitten (7, 8) angeordnet ist.

8. Wischblatt nach einem der Ansprüche 1 bis 7,
**dadurch gekennzeichnet,**
**dass** die Sicherungszunge (31, 32) an der dem Wischarm (1) zugewandten Stirnseite des Wischblattadapters (15) angeordnet ist.

9. Wischblatt nach einem der Ansprüche 1 bis 8,
**dadurch gekennzeichnet,**
**dass** der Wischblattadapter (15) wenigstens einen Anschluss (47, 48) für eine Leitung zur Versorgung des Wischblattes (10) mit einer Waschflüssigkeit aufweist, und dass der Wischblattadapter (15) an seiner Oberseite im Bereich des Anschlusses (47, 48) einen Durchbruch (29) aufweist, der einen Eingriff zum Anschluss (47, 48) ermöglicht.

10. Wischblatt nach Anspruch 9,
**dadurch gekennzeichnet,**
**dass** der Durchbruch (29) in Ausrichtung mit einer im Basisabschnitt (4) des Wischarms (1) ausgebildeten Öffnung (9) angeordnet ist.

## Revendications

1. Balai d'essuie-glace (10) pour un aménagement d'essuie-glace (100) d'un véhicule motorisé, comprenant un corps de balai d'essuie-glace allongé (11), qui peut être attaché par l'intermédiaire d'un adaptateur de balai d'essuie-glace (15) sur un bras d'essuie-glace (1) de l'aménagement d'essuie-glace (100), dans lequel l'adaptateur de balai d'essuie-glace (15) est constitué d'un élément d'adaptateur (17) sur le côté du balai d'essuie-glace et d'un élément d'adaptateur (18) sur le côté du bras d'essuie-glace, qui sont aménagés de manière à pouvoir pivoter l'un par rapport à l'autre dans un axe de rotation (19), dans lequel l'élément d'adaptateur (18) sur le côté du bras d'essuie-glace peut être connecté au bras d'essuie-glace (1) sur une extrémité du bras d'essuie-glace, dans lequel l'extrémité du bras d'essuie-glace dans la région de connexion (3) avec l'élément d'adaptateur (18) sur le côté du bras d'essuie-glace présente une section transversale sensiblement en forme de U avec une section de base (4) et deux branches latérales (5, 6) qui font saillie à partir de la section de base (4), dans lequel les branches latérales (5, 6) sur le côté opposé à la section de base (4) présentent respectivement deux sections de support courbées vers l'intérieur (7, 8) qui encerclent l'élément adaptateur (18) sur le côté du bras d'essuie-glace pour attacher le balai d'essuie-glace (10) sur le bras d'essuie-glace (1), et dans lequel l'élément d'adaptateur (18) sur le côté du bras d'essuie-glace comprend au moins une languette de fixation aménagée de façon articulée (31, 32) présentant une région de support (35) qui, dans la position opérationnelle du balai d'essuie-glace (10) sur le bras d'essuie-glace (1), retient le balai d'essuie-glace (10) contre une direction de montage (49), **caractérisé en ce que** les deux sections de support courbées vers l'intérieur (7, 8) sont espacées l'une de l'autre axialement dans la direction longitudinale du bras d'essuie-glace (1) ou respectivement de l'adaptateur de balai d'essuie-glace (15), et **en ce que** ladite au moins une languette de fixation (31, 32), lors du montage du balai d'essuie-glace (10) sur le bras d'essuie-glace (1), est aménagée dans une connexion opérationnelle avec une section de support (8) du bras d'essuie-glace (1) et est pressée par ce dernier dans la direction de l'adaptateur de balai d'essuie-glace (15), et **en ce que** dans la position opérationnelle, la section de support (8) repose contre la région de support (35) des languettes de fixation (31, 32), formant un arrêt.

2. Balai d'essuie-glace selon la revendication 1, **caractérisé en ce que** deux languettes de fixation (31, 32) sont aménagées sur des côtés opposés de l'élément d'adaptateur (18) sur le côté du bras d'essuie-glace.

3. Balai d'essuie-glace selon la revendication 1 ou 2, **caractérisé en ce que** sur le côté faisant face à la section de base (4) de la région de connexion (3), la languette de fixation (31, 32) est connectée à l'élément d'adaptateur (18) sur le côté du bras d'essuie-glace et s'étend de façon sensiblement perpendiculaire à l'axe longitudinal de l'élément d'adaptateur (18) sur le côté du bras d'essuie-glace.

4. Balai d'essuie-glace selon la revendication 3, **caractérisé en ce que** la languette de fixation (31, 32) présente à sa première extrémité une région d'actionnement actionnable manuellement (37).

5. Balai d'essuie-glace selon la revendication 4, **caractérisé en ce que** la région d'actionnement (37) fait saillie latéralement au-dessus de la branche latérale (5, 6) du bras d'essuie-glace (1).

6. Balai d'essuie-glace selon l'une des revendications 3 à 5, **caractérisé en ce que** sur le côté faisant face à la section de base (4) de la région de connexion (3), la languette de fixation (31, 32) présente une première région (33), aménagée espacée de la section de support (8), à laquelle une deuxième région aménagée en oblique (34) est contiguë, qui est aménagée dans une connexion opérationnelle avec la section de support (8).

7. Balai d'essuie-glace selon l'une des revendications 1 à 6, **caractérisé en ce que** l'axe de rotation (19) entre les deux éléments d'adaptateur (17, 18) est aménagé dans une région entre les sections de support (7, 8) qui sont espacées axialement l'une de l'autre dans une direction longitudinale.

8. Balai d'essuie-glace selon l'une des revendications 1 à 7, **caractérisé en ce que** la languette de fixation (31, 32) est aménagée sur la face avant de l'adaptateur de balai d'essuie-glace (15) en face du bras d'essuie-glace (1).

9. Balai d'essuie-glace selon l'une des revendications 1 à 8, **caractérisé en ce que** l'adaptateur de balai d'essuie-glace (15) présente au moins une connexion (47, 48) pour une ligne d'alimentation du balai d'essuie-glace (10) avec un fluide de lavage, et **en ce que** sur son côté supérieur dans la région de la connexion (47, 48), l'adaptateur de balai d'essuie-glace (15) comporte une ouverture (29) qui permet une intervention sur la connexion (47, 48).

10. Balai d'essuie-glace selon la revendication 9, **caractérisé en ce que** l'ouverture (29) est aménagée en alignement avec une ouverture (9) formée dans la section de base (4) du bras d'essuie-glace (1).
